Europäisches Patentamt

(19) European Patent Office

Office européen des brevets

(11) Numéro de publication: **0 081 586**
**B1**

(12) **FASCICULE DE BREVET EUROPEEN**

(45) Date de publication du fascicule du brevet:
04.12.85

(21) Numéro de dépôt: **81902843.2**

(22) Date de dépôt: **04.08.81**

(86) Numéro de dépôt international:
**PCT/RO 81/00004**

(87) Numéro de publication internationale:
**WO 82/01965 (10.06.82** Gazette 82/15)

(51) Int. Cl.⁴: **H 02 K 7/106**

(54) **MOTEUR ELECTRIQUE FREIN ASYNCHRONE A ROTOR EN COURT-CIRCUIT ET A DOUBLE ACTION.**

(30) Priorité: **02.12.80 RO 102742**

(43) Date de publication de la demande:
**22.06.83 Bulletin 83/25**

(45) Mention de la délivrance du brevet:
**04.12.85 Bulletin 85/49**

(84) Etats contractants désignés:
**CH DE FR LI SE**

(56) Documents cités:
**EP - A - 0 060 898**
**DE - A - 951 024**
**DE - A - 2 819 942**
**DE - A - 2 846 661**
**DE - C - 1 043 483**
**FR - A - 1 181 434**
**FR - A - 1 563 930**
**FR - A - 2 133 197**
**GB - A - 889 848**
**GB - A - 996 359**
**US - A - 2 536 491**

(73) Titulaire: **INSTITUTUL DE CERCETARE PENTRU INDUSTRIA ELECTROTEHNICA-ICPE, Bd.Tudor Vladimirescu nr. 45-47, sect. 5 cod.76.134, Bucharest (RO)**

(72) Inventeur: **APETREI, Constantin, str. Armeneascá nr. 17 sect. I, cod 70.228 Bucuresti (RO)**
Inventeur: **NITIGUS, Victor, al. Arinului Dornei nr. 10 bl. M30 et 8 ap. 30, sect. V, Bucuresti (RO)**
Inventeur: **DEMETER, Elek, Prelungirea Ferentari nr 52, bl A. ap 6 sect. V Bucuresti (RO)**
Inventeur: **RADULESCU, Marian, Cal. Victoriei pr.32-34, sc.D, et.3 ap.69,Sect.I, Bucuresti (RO)**
Inventeur: **SACHELARIE, Toma, Strasse Tohan No. 1 bl. 29, sc. A, ap. 22, et 5, Sector 4, cod 75.128 Bucuresti (RO)**

(74) Mandataire: **Chameroy, Claude et al, c/o Cabinet Malemont 42, avenue du Président Wilson, F-75116 Paris (FR)**

BUNDESDRUCKEREI BERLIN

## Description

La présente invention concerne un moteur-frein asynchrone ayant le rotor en court-circuit et une double action, dont le champ magnétique propre génère simultanément un couple de rotation sur le rotor ainsi qu'une force électromagnétique qui débloque le frein.

Le document EP-A-0 060 898 (appartenant à l'état de la technique visé à l'article 54 (3)) décrit un moteur qui possède, pour pouvoir utiliser une partie du champ magnétique généré par l'enroulement d'excitation statorique, afin de générer la force d'attraction axiale sur l'armature mobile qui débloque le frein, un paquet statorique proprement dit prolongé avec un paquet statorique supplémentaire ayant le même nombre d'encoches que le paquet statorique proprement dit, les dents des encoches se prolongeant vers la zone centrale jusqu'au niveau du diamètre intérieur de la bague de court-circuit du rotor et étant séparées par le prolongement correspondant des encoches. Cette forme du paquet statorique supplémentaire présente l'inconvénient de rendre difficile la technologie d'excitation du stator de la machine et les possibilités de bobinage automatique du stator.

On connaît également, par le document FR-A-1 181 434, un moteur-frein qui élimine cet inconvénient puisqu'il comprend un paquet statorique normal prolongé par un paquet statorique supplémentaire, ayant la même géométrie transversale que le paquet statorique normal, ces deux paquets ayant un enroulement d'excitation commun, et un paquet rotorique normal, avec un prolongement comportant des paquets de dents devant lesquelles est disposée une armature mobile pour débloquer le frein, qui peut se déplacer axialement sur l'arbre, les barres de la cage rotorique étant prolongées dans la zone située au-dessous du paquet statorique supplémentaire et séparées dans cette zone par les paquets de dents.

Le moteur décrit par ce document permet d'utiliser une partie du flux magnétique du stator pour débloquer le système de freinage, mais n'assure pas néamoins une force d'attraction suffisante pour réaliser des couples de freinage élevés.

La présente invention permet de remédier à cet inconvénient, elle concerne un moteur électrique frein asynchrone selon le préambule de la revendication 1 et est caractérisée en ce que les encoches créées entre les paquets de dents sont ouvertes vers l'intérieur, en ce que les barres de la cage rotorique sont court-circuitées à travers ces orifices par une bague de court circuit placée dans cette zone, l'armature mobile qui débloque le frein constituant, dans la zone correspondante, une partie du circuit magnétique qui ferme le flux magnétique engendré par le courant qui traverse la bague de court-circuit, flux magnétique qui s'unit dans l'entrefer situé entre l'armature mobile et les paquets de dents, avec le flux magnétique engendré par l'enroulement d'excitation dans la zone du paquet statorique supplémentaire, ces deux flux engendrant ensemble la force électromagnétique d'attraction axiale qui s'exerce sur l'armature mobile qui débloque le frein.

Ainsi, l'action combinée du champ magnétique engendré par le courant qui parcourt l'anneau de court-circuit de la cage rotorique de la zone modifiée du rotor et du champ magnétique statorique, engendré dans la zone du paquet statorique qui se trouve en face de la zone du circuit magnétique rotorique modifié, exerce une force d'attraction élevée sur l'armature mobile, ce qui permet de réaliser des couples de freinage importants.

De préférence, la zone active de l'armature mobile qui débloque le frein, située devant le paquet de dents, peut être réalisée soit à partir d'un tore obtenu par le roulage d'une tôle électrotechnique, pour favoriser la pénétration du champ magnétique et diminuer les pertes par courants tourbillonnaires, en régime transitoire, soit en acier massif.

Selon une autre caractéristique, l'armature mobile qui débloque le frein est fixée sur l'arbre soit à l'aide d'un ajustage glissant, soit à l'aide d'un roulement correspondant, qui peut être un roulement qui lui donne la possibilité d'un déplacement axial.

Selon encore une autre caractéristique, la force électromagnétique d'attraction axiale qui s'exerce sur l'armature mobile qui débloque le frein se transmet sur une pièce de frottement qui joue aussi le rôle de ventilateur, à l'aide d'une vis, d'unetige placée dans l'orifice central de l'arbre, d'écrous de réglage et d'un manchon cannelé.

D'autres caractéristiques et avantages de l'invention ressortiront de la description qui va suivre d'un exemple de réalisation d'un moteur-frein asynchrone à rotor en court-circuit et double action selon l'invention, en référence aux dessins annexés dans lesquels:

la figure 1 est une vue en coupe longitudinale à travers l'ensemble du moteur; et

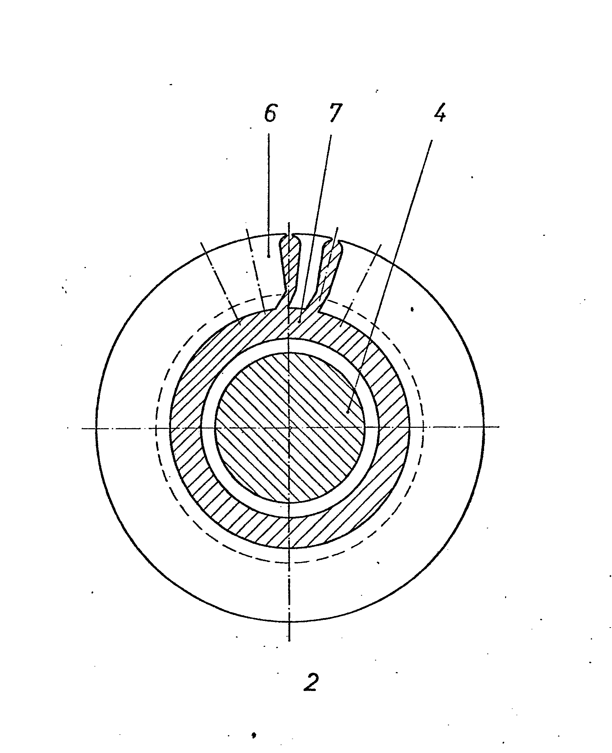

la figure 2 est une vue en coupe transversale à travers la zone du rotor située au-dessous du paquet statorique supplémentaire.

Le moteur conforme à la présente invention est conçu de telle manière que le champ magnétique propre génère simultanément, un couple de rotation sur le rotor, ainsi que la force électromagnétique nécessaire et suffisante pour débloquer le frein. C'est pourquoi le moteur possède, outre le paquet statorique normal, un paquet statorique supplémentaire dont l'enroulement d'excitation est commun; les barres de la cage du paquet rotorique se prolongent dans la zone située au-dessous du paquet statorique supplémentaire, et elles sont séparées par des paquets de dents entre lesquels se forment des encoches ayant la même forme que les encoches de la zone normale du paquet rotorique, mais qui s'ouvrent à l'intérieur et, par ces orifices, sont court-circuitées par la bague de court-circuit placée dans cette zone; les paquets de dents sont séparés magnétiquement de la zone normale du paquet rotorique. L'armature mobile qui débloque le frein peut être réalisée en totalité en acier massif et elle peut être fixée sur l'arbre du moteur soit à l'aide d'un ajustage glissant, soit par un roulement correspondant qui peut être un roulement à aiguilles.

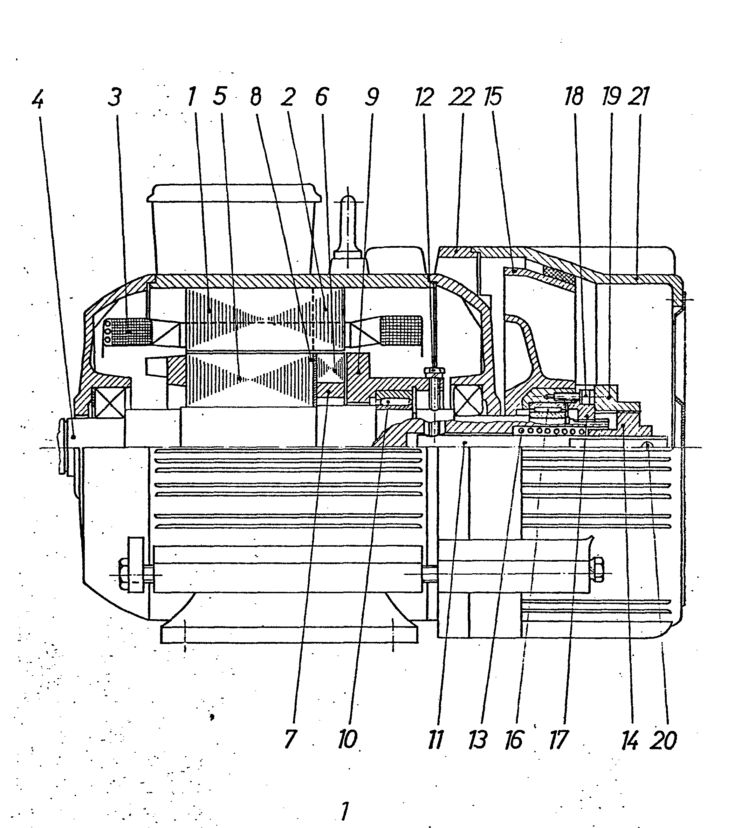

La figure 1 représente le moteur qui est formé d'un stator normal 1, qui se prolonge par un paquet statorique supplémentaire 2, les deux ayant la même géométrie transversale et d'un enroulement d'excitation commun 3. Sur l'arbre 4 du moteur se trouve un paquet rotorique normal dont les barres de la cage se prolongent dans la zone située au-dessous du paquet statorique supplémentaire 2, et sont séparées par le paquet de dents 6 entre lesquels se forment des enchoches ayant la même forme que les encoches situées dans la zone du paquet rotorique normal 5. Toutefois ces encoches s'ouvrent à l'intérieur et, par ces orifices, elles sont court-circuitées par la bague de court-circuit 7, située dans cette zone, les paquets de dents 6 étant séparés magnétiquement de la zone du paquet rotorique normal 5, par une pièce d'écartement 8. L'armature mobile 9, qui débloque le frein, est fixée sur l'arbre 4 à l'aide du roulement à aiguilles 10 qui lui donne la possibilité d'un déplacement axial dans les conditions d'une sécurité supérieure. Par l'orifice central, pratiqué dans l'arbre 4, on introduit la tige 11 qui est attachée à l'armature mobile 9 qui débloque le frein, par la vis 12 qui traverse radialement l'arbre 4 par un orifice ovalisé axialement. Le ressort de pression 13, qui produit la force de freinage, est situé autour de la tige 11 et s'appuie par une extrémité sur le collet correspondant de l'orifice central pratiqué dans l'arbre 4, l'autre extrémité s'appuyant sur le collet de l'écrou de réglage 14. Le ventilateur 15, qui est en même temps l'une des pièces de frottement, est fixé sur l'arbre 4 à l'aide du roulement à aiguille 16 qui donne la possibilité d'un déplacement axial tout en lui assurant un bon centrage. Le couple de rotation ou le couple de freinage se transmettent de l'arbre 4 au ventilateur 15 inversement à l'aide d'un manchon cannelé 17 qui est fixé sur le ventilateur 15 par les vis 18. Le déplacement axial de la tige 11 sous l'action de la force électromagnétique axiale de freinage qui s'exerce sur l'armature mobile 9 qui débloque le frein, ou sous l'action de la force de freinage produite par le ressort de pression 13, se transmet au ventilateur 15 à l'aide de l'écrou de réglage 19 sur lequel il est fixé à l'aide de vis. L'écrou de réglage 14 est bloqué sur la tige 11 à l'aide de la goupille 20 qui traverse la tige 11 par un trou radial. Le capot 21 joue aussi le rôle d'une pièce de frottement et il est fixé dans le bouclier 22 par un ajustage correspondant et des vis. Au moment où l'enroulement statorique 3 n'est pas alimenté, le ressort de pression 13 presse le ventilateur 15 sur le capot 21 par les surfaces de frottement. Entre les surfaces de frottement qui peuvent être coniques comme dans la figure, ou planes, se produit la force de freinage qui bloque l'arbre 4. Lorsque l'enroulement statorique 3 est alimenté, le champ magnétique généré par le courant qui traverse la bague de court-circuit 7, combiné avec le champ magnétique généré par l'enroulement statorique 3 dans la zone du paquet statorique supplémentaire 2, exerce une force d'attraction axiale sur l'armature mobile 9 qui débloque le frein, et comprime le ressort de pression 13, éloignant le ventilateur 15 du capot 21, et de cette manière la force de freinage est éliminée. Pour régler la force de freinage, on renonce à la goupille 20, on tourne l'écrou 14 en le vissant sur la tige 11, et on détermine ainsi une variation de la force générée par le ressort de pression 13. L'effet de l'usure des materiaux de frottement est amélioré à l'aide de l'écrou 19.

Le moteur qui fait l'objet de cette invention présente l'avantage de l'emploi de la technologie classique de fabrication du stator de la machine, chose facile à réaliser du point de vue technologique, les modifications opérées ayant seulement pour objet le rotor de la machine.

## Revendications

1. Moteur électrique frein asynchrone à rotor en court-circuit et double action, comprenant un paquet statorique normal (1) prolongé par un paquet statorique supplémentaire (2), ayant la même géométrie transversale que la paquet statorique normal (1), ces deux paquets ayant un enroulement d'excitation commun (3) et un paquet rotorique normal (5), avec un prolongement comportant des paquets de dents (6) devant lesquelles est disposée une armature mobile (9) pour débloquer le frein, qui peut se déplacer axialement sur l'arbre (4), les barres de la cage rotorique étant prolongées dans la zone située au-dessous du paquet statorique supplémentaire (2) et séparées dans cette zone par les paquets de dents (6) les paquets de dents (6) étant séparés magnétiquement de la zone du paquet rotorique normal (5) par une pièce d'écartement (8), caractérisé en ce que les encoches créés entre les paquets de dents (6) sont ouvertes vers l'intérieur, en ce que les barres de la cage rotorique sont court-circuitées à travers ces orifices par une bague de court-circuit (7) placée dans cette zone, l'armature mobile (9) qui débloque le frein constituant, dans la zone correspondante, une partie du circuit magnétique qui ferme le flux magnétique engendré par le courant qui traverse la bague de court-circuit (7), flux magnétique qui s'unit dans l'entrefer situé entre l'armature mobile (9) et les paquets de dents (6), avec le flux magnétique engendré par l'enroulement d'excitation (3) dans la zone du paquet statorique supplémentaire (2), ces deux flux engendrant ensemble la force électromagnétique d'attraction axiale qui s'exerce sur l'armature mobile (9) qui débloque le frein.

2. Moteur électrique frein asynchrone à rotor en court-circuit et double action conforme à la revendication 1, caractérisé par le fait que la zone active de l'armature mobile (9) qui débloque le frein, située devant le paquet de dents (6), peut être réalisée soit à partir d'un tore obtenu par le roulage d'une tôle électrotechnique, pour favoriser la pénétration du champ magnétique et diminuer les pertes par courants tourbillonnaires, en régime transistoire, soit en acier massif.

3. Moteur électrique frein asynchrone à rotor en court-circuit et double action, conforme aux revendications 1 et 2, caractérisé par le fait que l'armature mobile (9) qui débloque le frein est fixée sur l'arbre (4) soit à l'aide d'un ajustage glissant, soit à l'aide d'un roulement (16) correspondant, qui peut être un roulement qui lui donne la possibilité d'un déplacement axial.

4. Moteur électrique frein asynchrone ayant le rotor en court-circuit et une double action, conforme aux revendications 1, 2, et 3, caractérisé par le fait que la force électromagnétique d'attraction axiale qui s'exerce sur l'armature mobile (9) qui débloque le frein se transmet sur une pièce de frottement (15) qui joue aussi le rôle de ventilateur, à l'aide d'une vis (12), d'une tige (11) placée dans l'orifice central de l'arbre (4), d'écrous de réglage (14 et 19) et d'un manchon cannelé (17).

5. Moteur électrique frein asynchrone ayant le rotor en court-circuit et une double action conforme aux revendications 1 à 4, caractérisé par le fait que la force de freinage entre les surfaces de frottement du ventilateur (15) et le capot (21) est générée par la force qui naît dans un ressort de pression (13) placé autour de la tige (11), le ressort de pression (13) s'appuyant par une extrémité sur le collet correspondant de l'orifice central pratiqué dans l'arbre (4) et par l'autre extrémité sur le collet de l'écrou de réglage (14).

6. Moteur électrique frein asynchrone ayant le rotor en court-circuit et une double action conforme aux revendications 1 à 5, caractérisé par le fait que la valeur du couple de freinage peut être réglée à l'aide de l'écrou de réglage (14) qui se visse sur la tige (11) en déterminant une variation de la force générée par le ressort de pression (13), l'écrou de réglage (14) pouvant être bloqué sur la tige (11) à l'aide d'une goupille (20) qui pénètre dans la tige par un orifice radial.

7. Moteur électrique frein asynchrone ayant le rotor en court-circuit et une double action conforme aux revendications 1 à 6, caractérisé par le fait que l'usure des matériaux de frottement est comprimée à l'aide d'un écrou de réglage (19) qui se visse sur l'écrou de réglage de la force de freinage (14), changeant ainsi la position du ventilateur (15) par rapport à la tige (11).

**Patentansprüche**

1. Elektrischer Bremsasynchronmotor mit Kurzschlußläufer und Doppelwirkung, mit einem normalen Ständerpaket (1), welches durch ein zusätzliches Ständerpaket (2) verlängert ist, das dieselbe Quergeometrie wie das normale Ständerpaket (1) hat, wobei diese beiden Pakete eine gemeinsame Erregerwicklung (3) haben, und mit einem normalen Läuferpaket (5) mit einer Verlängerung, die Zahnpakete (6) aufweist, vor denen ein beweglicher Bremslüftanker (9) angeordnet ist, der auf der Welle (4) axial verschiebbar ist, wobei die Stäbe des Läuferkäfigs in die Zone verlängert sind, welche sich unter dem zusätzlichen Ständerpaket (2) befindet, und in dieser Zone durch die Zahnpakete (6) getrennt sind und wobei die Zahnpakete (6) von der Zone des normalen Läuferpakets (5) durch ein Distanzstück (8) magnetisch getrennt sind, dadurch gekennzeichnet, daß die zwischen den Zahnpaketen (6) gebildeten Nuten nach innen offen sind, daß die Stäbe des Läuferkäfigs über diese Öffnungen durch einen Kurzschlußring (7), der in dieser Zone angeordnet ist, kurzgeschlossen sind, wobei der bewegliche Bremslüftanker (9) in der entsprechenden Zone einen Teil des magnetischen Kreises bildet, der den magnetischen Fluß schließt, welcher durch den Strom erzeugt wird, der durch den Kurzschlußring (7) fließt, wobei der magnetische Fluß sich in dem Luftspalt, der sich zwischen dem beweglichen Anker (9) und den Zahnpaketen (6) befindet, mit dem magnetischen Fluß vereinigt, welcher durch die Erregerwicklung (3) in der Zone des zusätzlichen Ständerpakets (2) erzeugt wird, und wobei diese beiden Flüsse gemeinsam die axiale elektromagnetische Anziehungskraft erzeugen, die auf den beweglichen Bremslüftanker (9) ausgeübt wird.

2. Elektrischer Bremsasynchronmotor mit Kurzschlußläufer und Doppelwirkung nach Anspruch 1, dadurch gekennzeichnet, daß die aktive Zone des beweglichen Bremslüftankers (9), die sich vor den Zahnpaketen (6) befindet, entweder durch eine Wickelkern aus Elektroblech, um das Eindringen des Magnetfeldes zu begünstigen und Verluste durch Wirbelströme im Übergangsbetrieb zu verringern, oder aus massivem Stahl bestehen kann.

3. Elektrischer Bremsasynchronmotor mit Kurzschlußläufer und Doppelwirkung nach den Ansprüchen 1 und 2, dadurch gekennzeichnet, daß der bewegliche Bremslüftanker (9) auf der Welle (4) entweder mit Hilfe eines Gleitsitzes oder mit Hilfe eines entsprechenden Lagers (16) befestigt ist, bei welchem es sich um ein Lager handeln kann, das ihm die Möglichkeit einer axialen Verschiebung gibt.

4. Elektrischer Bremsasynchronmotor mit dem Kurzschlußläufer und einer Doppelwirkung nach den Ansprüchen 1, 2 und 3, dadurch gekennzeichnet, daß die axiale elektromagnetische Anziehungskraft, die auf den beweglichen Bremslüftanker (9) ausgeübt wird, auf ein Reibstück (15), das außerdem als Ventilator dient, mit Hilfe einer Schraube (12), eines in der zentralen Öffnung der Welle (4) angeordneten Schaften (11), von Einstellmuttern (14 und 19) und einer mit Rippen versehenen Hülse (17) übertragen wird.

5. Elektrischer Bremsasynchronmotor mit dem Kurzschlußläufer und einer Doppelwirkung nach den Ansprüchen 1 bis 4, dadurch gekennzeichnet, daß die Bremskraft zwischen den Reibflächen des Ventilators (15) und der Haube (21) durch die Kraft erzeugt wird, welche eine Druckfeder (13) liefert, die um den Schaft (11) angeordnet ist, wobei sich die Druckfeder (13) mit einem Ende auf dem entsprechenden Rand der in der Welle (4) gebildeten zentralen Öffnung und mit dem anderen Ende auf dem Rand der Einstellmutter (14) abstützt.

6. Elektrischer Bremsasynchronmotor mit dem Kurzschlußläufer und einer Doppelwirkung nach den Ansprüchen 1 bis 5, dadurch gekennzeichnet, daß der Wert des Bremsmoments mit Hilfe der Einstellmutter (14) einstellbar ist, die auf den Schaft (11) aufgeschraubt wird, wobei eine Veränderung der durch die Druckfeder (13) erzeugten Kraft festgelegt wird, wobei die Einstellmutter (14) auf dem Schaft (11) mit Hilfe eines Stiftes (20) arretierbar ist, der durch eine radiale Öffnung in den Schaft eindringt.

7. Elektrischer Bremsasynchronmotor mit dem Kurzschlußläufer und einer Doppelwirkung nach den Ansprüchen 1 bis 6, dadurch gekennzeichnet, daß der Verschleiß der Reibmaterialien mit Hilfe einer Einstellmutter (19) ausgeglichen wird, die auf der Mutter (14) zum Einstellen der Bremskraft verschraubt wird, wodurch die Position des Ventilators (15) in bezug auf den Schaft (11) verändert wird.

## Claims

1. Asynchronous elektric brake motor with short circuited rotor and double action, comprising a normal stator package (1) extended by an additional stator package (2), having the same transverse geometry as the normal stator package (1), these two packages having a common energization winding (3) and a normal rotor package (5), with an extension comprising packages of teeth (6) in front of which is disposed a mobile armature (9) for releasing the brake, which may move axially over the shaft (4), the bars of the rotor cage being extended in the zone situated below the additional stator package (2) and separated in this zone by the packages of teeth (6), the packages of teeth (6) being separated magnetically from the zone of the normal rotor package (5) by a spacer (8), characterized in that the slots created between the packages of teeth (6) are open inwardly, in that the bars of the rotor cage are short circuited through these orifices by a short circuiting ring (7) placed in this zone, the mobile armature (9) which releases the brake forming, in the corresponding zone, a part of a magnetic circuit which closes the magnetic flux generated by the current which flows through the short-circuit ring (7), which magnetic flux is combined in the air-gap between the mobile armature (9) and the packages of teeth (6) with the magnetic flux generated by the energization winding (3) in the zone of the additional stator package (2), the two fluxes generating together the axial electromagnetic attraction force which is exerted on the mobile armature (9) which releases the brake.

2. Asynchronous electric brake motor with short-circuited rotor and double action in accordance with claim 1, characterized by the fact that the active zone of the mobile armature (9) which releases the brake, situated in front of the package of teeth (6), may be formed either from a torus obtained by rolling an electrotechnical metal sheet, for promoting penetration of the magnetic field and reducing the lossed due to swirling current under transitory operating conditions, or from solid steel.

3. Asynchronous electric brake motor with short circuited rotor and double action in accordance with claims 1 and 2, characterized by the fact that the mobile armature (9) which releases the brake is fixed to the shaft (4) either by a sliding fit, or by means of a corresponding bearing (16) which may be a bearing which gives it the possibility of axial movement.

4. Asynchronous electric brake motor with short circuited rotor and double action in accordance with claims 1, 2 and 3, characterized by the fact that the axial electromagnetic attraction force which is exerted on the mobile armature (9) which releases the brake is transmitted to a friction piece (15) which also plays the role of fan, by means of a screw (12), a rod (11) placed in the central orifice of the shaft (4), adjustment nuts (14, 19) and splined sleeve (17).

5. Asynchronous electric brake motor with short-circuited rotor and double action in accordance with claims 1 to 4, characterized by the fact that the braking force between the friction surfaces of the fan (15) and the cover (21) is generated by the force originating in a pressure spring (13) placed about the rod (11), the pressure spring (13) bearing by one end on the corresponding flange of the central orifice formed in the shaft (4) and by the other end on the flange of the adjustment nut (14).

6. Asynchronous electric brake motor having the rotor short circuited and a double action in accordance with claims 1 to 5, characterized by the fact that the value of the braking torque may be adjusted by means of an adjusting nut (14) which is screwed on the rod (11) for determining a variation of the force generated by the pressure spring (13), which adjusting nut (14) may be locked on the rod (11) by means of a pin (20) which penetrates into the rod through a radial orifice.

7. Asynchronous electric brake motor having the rotor short-circuited and a double action in accordance with claims 1 to 6, characterized by the fact that the wear of the friction materials is reduced by means of an adjusting nut (19) which is screwed on the nut for adjusting the braking force (14), thus changing the position of the fan with respect to the rod (11).

1

6    7         4

2